# EUROPÄISCHE PATENTSCHRIFT

(11) **EP 2 631 605 B1**
(45) Veröffentlichungstag und Bekanntmachung des Hinweises auf die Patenterteilung: **26.11.2014**
(21) Anmeldenummer: 13156584.8
(22) Anmeldetag: 25.02.2013
(51) Int. Cl.: G01D 5/244, G01D 5/347

(54) **Aufbewahrungsspule mit einem Magnetmaßstabband und Verfahren zum Aufbewahren des Magnetmaßstabbands**
Storage coil with a magnetic measuring tape and method for storing the magnetic measuring tape
Bobine de conservation d'une bande d'échelle magnétique et procédé de conservation de la bande d'échelle magnétique

(30) Priorität: 24.02.2012 DE 102012101486
(43) Veröffentlichungstag der Anmeldung: 28.08.2013
(73) Patentinhaber: Bogen Electronic GmbH, 14163 Berlin (DE)
(72) Erfinder: Hoyer, Jörn, 14797 Großbeeren (DE)
(74) Vertreter: Elbel, Michaela

(56) Entgegenhaltungen:
- WO-A1-88/00331
- Bogen Electronic GmbH: "Datenblatt magnetband", , 13. Oktober 2010 (2010-10-13), XP002699408, Gefunden im Internet: URL:www.bogen-electronic.com/tl_files/pdf/ Datenblatt_Magnetband_Ausg_d.pdf [gefunden am 2013-06-21]
- Renishaw plc: "New linear magnetic encoders are ideal for harsh environments, tight spaces and measuring lengths to 100 metres", , 21. April 2009 (2009-04-21), XP002699401, Gefunden im Internet: URL:www.renishaw.com/media/doc/en/32015de9 191c4beca2c52acbec9421e3.doc [gefunden am 2013-06-21]

## Beschreibung

Die Erfindung betrifft eine Aufbewahrungsspule mit einem Magnetmaßstabband und ein Verfahren zum Aufbewahren des Magnetmaßstabbands mit der Aufbewahrungsspule.

Ein Magnetmaßstabband ist aus XP002699408 bekannt.

Im Werkzeugmaschinenbau ist es bekannt einen magnetischen Linearmaßstab zur Bestimmung einer absoluten Position eines Werkzeugschlittens zu verwenden. Hierzu ist der magnetische Linearmaßstab in Form eines langgestreckten magnetisierten Bands auf eine Referenzschiene aufgebracht, wobei das Band wechselseitig mit Nordpolen und Südpolen magnetisiert ist. Daraus ergibt sich für den Linearmaßstab ein binäres Bitmuster, das von einem Sensor gelesen wird, der an dem Werkzeugschlitten angebracht ist. Der Linearmaßstab ist beispielsweise mit einer Inkrementalspur versehen, die eine Polteilung bei gleichen Pollängen und somit einen regelmäßigen Wechsel zwischen Südpolen und Nordpolen aufweist.

Herkömmlich ist das Magnetmaßstabband von einem biegsamen, beispielsweise aus einem Kunststoff hergestellten Trägerband gebildet, das ferromagnetisches Material beinhaltet. Bei der Herstellung des Magnetmaßstabbands wird das ferromagnetische Material derart magnetisiert, dass das Magnetmaßstabband magnetische Domänen hat, die der Polteilung mit den Pollängen entspricht. Das Magnetmaßstabband wird beispielsweise mit einer Länge von 50 m bei einer Breite von 10 mm ausgeliefert. Um das Magnetmaßstabband auf ein gut handhabbares Packmaß zu bringen, ist es bekannt, das Magnetmaßstabband auf einen Wickelkern spiralartig aufzuwickeln, wobei eine derart gebildete Spule einen Durchmesser von 0,5 m bis 0,8 m und ein Gewicht von 4 kg bis 5 kg hat.

Entsprechend der Verwendung des Magnetmaßstabbands sind Anforderungen hinsichtlich der Maßgenauigkeit der Polteilung des Magnetmaßstabbands gestellt. Beträgt die Polteilung zwischen 1 mm und 5 mm liegt eine mögliche Toleranz der Pollängen zwischen Ist- und Sollwerten im Bereich von einigen Mikrometern. Somit sind neben der Herstellung des Magnetmaßstabbands an die Lagerung und den Transport des Magnetmaßstabbands entsprechende Anforderungen zu stellen, dass die geforderte Genauigkeit der Polteilung erhalten bleibt.

Aufgabe der Erfindung ist es eine Aufbewahrungsspule mit einem Magnetmaßstabband und ein Verfahren zum Aufbewahren des Magnetmaßstabbands in der Aufbewahrungsspule zu schaffen, wobei die Genauigkeit der Polteilung des Magnetmaßstabbands innerhalb einer vorgegebenen Toleranz erhalten bleibt.

Die Aufgabe wird gelöst mit den Merkmalen der Patentansprüche 1 und 7. Bevorzugte Ausgestaltungen dazu sind in den weiteren Patentansprüchen angegeben.

Die erfindungsgemäße Aufbewahrungsspule weist einen Wickelkern und ein ein ferromagnetisches Material aufweisendes Magnetmaßstabband, das mit einer Polteilung mit vorherbestimmten Pollängen magnetisiert ist, sowie ein Zwischenlagenband auf, das mindestens die Breite und die Länge des Magnetmaßstabbands hat und an das das Magnetmaßstabband flächig angelegt ist, wobei das Magnetmaßstabband zusammen mit dem Zwischenlagenband auf den Wickelkern in mehreren Windungen spiralenartig aufgewickelt ist, so dass in Radialrichtung des Wickelkerns Windung für Windung das Magnetmaßstabband und das Zwischenlagenband sich abwechseln, wobei das Zwischenlagenband aus einem paramagnetischen Material ist und eine Dicke hat, die gleich oder größer einer Minimaldicke ist, die derart bestimmt ist, dass die einzelnen Windungen des Magnetmaßstabbands von dem Zwischenlagenband derart voneinander magnetisch entkoppelt sind, dass im Abwickelzustand die Pollängen des Magnetmaßstabbands trotz der magnetischen Wechselwirkung der einzelnen Windungen lediglich einer Pollängenveränderung unterliegen, die unterhalb einer vorgegebenen tolerierten Pollängenveränderung liegt.

Somit wird vorteilhaft erreicht, dass das in der Aufbewahrungsspule aufgewickelte Magnetmaßstabband aufgrund der magnetischen Wechselwirkung zwischen den einzelnen Windungen lediglich innerhalb eines noch tolerierbaren Maßes verstimmt wird. Mit dem Zwischenlagenband ist die magnetische Entkopplung der einzelnen Windungen des Magnetmaßstabbands erreicht, wodurch im Abwickelzustand die Pollängenänderung, die im Aufwickelzustand von benachbarten Windungen des Magnetmaßstabbands verursacht wurde, lediglich zu einer Pollängenveränderung führt, die innerhalb der vorgegebenen tolerierten Pollängenveränderung liegt.

Bevorzugtermaßen ist die Minimaldicke direkt proportional zur minimalen vorherbestimmten Pollänge. Ferner ist es bevorzugt, dass die Minimaldicke direkt proportional zur um die vorgegebene tolerierte Pollängenveränderung reduzierten minimalen vorherbestimmten Pollänge ist, wobei die Minimaldicke und die minimale vorherbestimmte Pollänge in Millimeter und die vorgegebene tolerierte Pollängenveränderung in µm/m angegeben sind. Hierbei ist es bevorzugt, dass die Minimaldicke gleich dem eins bis zweifachen, insbesondere 1,2-fachen, der Differenz aus der minimalen vorherbestimmten Pollänge und einem Zehntel der vorgegebenen tolerierten Pollängenveränderung ist. Besonders bevorzugt errechnet sich also die Minimaldicke nach der Formel: Minimaldicke = 1,2 * (minimale vorbestimmte Pollänge - ein Zehntel der vorgegebene tolerierte Pollängenveränderung). Hierbei ist die minimale vorherbestimmte Pollänge in mm, die vorgegebene tolerierte Pollängenveränderung in µm/m angegeben, woraus sich die Minimaldicke in mm ergibt. Es sind die Zahlenwerte mit den ihnen zugeordneten Einheiten zu nehmen. Überraschenderweise hat sich gezeigt, dass durch das Vorsehen des Zwischenlagenbands mit der Dicke, die der Minimaldicke entspricht oder größer ist, die Polteilung des Magnetmaßstabbands, wenn es von dem Wickelkern abgewickelt ist, lediglich eine derart geringe Pollängenveränderung erfahren hat, die unterhalb der vorgegebenen tolerierten Pollängenveränderung liegt.

Das paramagnetische Material ist bevorzugt ein Kunststoff, insbesondere ein Polyethylenschaum. Bevorzugtermaßen ist das Zwischenlagenband von mehreren Lagen gebildet, deren Gesamtdicke gleich oder größer der Minimaldicke ist. Die Lagen liegen flächig aneinander und bilden so das Zwischenlagenband, wobei durch das entsprechende Vorsehen von den mehreren Lagen mehrere Abstufungen in der Dicke des Zwischenlagenbands gebildet werden können. Dies ist insbesondere dann vorteilhaft, wenn das Zwischenlagenband lediglich mit einer Normdicke zur Verfügung steht, wobei durch das Übereinanderlegen der mehreren Lagen die Minimaldicke für das Zwischenlagenband angenähert werden kann.

Das erfindungsgemäße Verfahren zum Aufbewahren eines ein ferromagnetisches Material aufweisenden Magnetmaßstabbands mit der Aufbewahrungsspule weist die Schritte auf: Bereitstellen des Wickelkerns und des Magnetmaßstabbands, das mit der Polteilung mit den vorherbestimmten Pollängen magnetisiert ist; Bestimmen der Minimaldicke des Zwischenlagenbands derart, dass im Aufwickelzustand des Magnetmaßstabbands die einzelnen Windungen des Magnetmaßstabbands von dem Zwischenlagenband derart voneinander magnetisch entkoppelt sind, dass im Abwickelzustand die Pollängen des Magnetmaßstabbands trotz der magnetischen Wechselwirkung der einzelnen Windungen lediglich einer Pollängenveränderung unterliegen, die unterhalb einer vorgegebenen tolerierten Pollängenveränderung liegt; Bereitstellen des Zwischenlagenbands mit einer Breite, die mindestens der Breite des Magnetmaßstabbands entspricht, einer Länge, die mindestens der Länge des Magnetmaßstabbands entspricht, und einer Dicke, die gleich oder größer der Minimaldicke ist; Zusammenbringen des Magnetmaßstabbands und des Zwischenlagenbands, so dass das Magnetmaßstabband und das Zwischenlagenband flächig aneinanderliegen; spiralartiges Aufwickeln des Magnetmaßstabbands zusammen mit dem Zwischenlagenband auf dem Wickelkern wobei das Magnetmaßstabband zusammen mit den Zwischenlagenband auf den Wickelkern in mehreren Windungen spiralartig aufgewickelt wird, so dass in Radialrichtung des Wickelkerns Windung für Windung das Magnetmaßstabband und das Zwischenlagenband sich abwechseln.

Im Folgenden werden bevorzugte Ausführungsbeispiele der erfindungsgemäßen Aufbewahrungsspule anhand der beigefügten schematischen Zeichnungen erläutert. Es zeigen:
Figur 1 eine perspektivische Ansicht einer erfindungsgemäßen Aufbewahrungsspule,
Figur 2 eine Draufsicht der erfindungsgemäßen Aufbewahrungsspule aus Figur 1,
Figur 3 ein Diagramm zur Ermittlung einer Minimaldicke eines Zwischenlagenbands der Aufbewahrungsspule aus Figur 1,
Figur 4 eine Seitenansicht mit magnetischem Kontrast einer ersten Ausführungsform der Aufbewahrungsspule aus Figur 1 und
Figur 5 eine Seitenansicht mit magnetischem Kontrast einer zweiten Ausführungsform der Aufbewahrungsspule aus Figur 1.

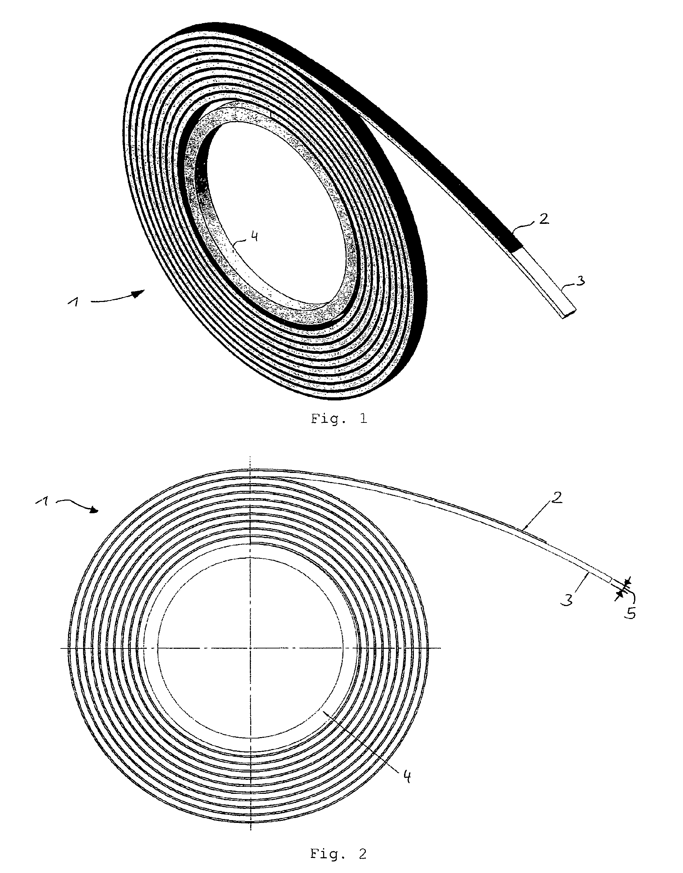

Wie es aus Figuren 1 bis 5 ersichtlich ist, weist eine Aufbewahrungsspule 1 ein Magnetmaßstabband 2 und ein Zwischenlagenband 3 auf, die spulenartig auf einen Wickelkern 4 aufgewickelt sind. Das Magnetmaßstabband 2 weist ein ferromagnetisches Material auf, das derart magnetisiert ist, dass das Magnetmaßstabband 2 magnetische Domänen hat, die einer Polteilung 12 mit gleichen Pollängen 6 entspricht. Der Wickelkern 4 ist ein zylindrischer Ring, der zum Tragen der Wicklung bestehend aus dem Magnetmaßstabband 2 und dem Zwischenlagenband 3 ausgebildet ist. Die Breite des Magnetmaßstabbands 2, die Breite des Zwischenlagenbands 3 und die axiale Erstreckung des Wickelkerns 4 sind gleich und betragen beispielhaft 10 mm. Die Länge des Magnetmaßstabbands 2 beträgt beispielhaft 50 m, wobei das Zwischenlagenband 3 etwas länger als das Magnetmaßstabband 2 ausgebildet ist, so dass am außenliegenden Ende der von dem Magnetmaßstabband 2 und dem Zwischenlagenband 3 gebildeten Wicklung ein Überstand des Zwischenlagenbands 3 von dem Magnetmaßstabband 2 ausgebildet ist. Die Aufbewahrungsspule 1 hat einen Durchmesser von beispielhaft 600 mm und wiegt beispielhaft 4,5 kg.

Das Magnetmaßstabband 2 ist auf das Zwischenlagenband 3 gelegt, so dass von dem Magnetmaßstabband 2 und dem Zwischenlagenband 3 quasi ein Wickelband gebildet ist, wobei das Zwischenlagenband 3 radial innenliegend und das Magnetmaßstabband 2 radial außenliegend angeordnet sind. Dadurch wechseln sich von Windung zu Windung in Radialrichtung des Wickelkerns 4 gesehen das Magnetmaßstabband 2 und das Zwischenlagenband 3 wechselseitig ab. Für die radial innerste Windung des Magnetmaßstabbands 2 ist auf das Zwischenlagenband 3 verzichtet, da das Magnetmaßstabband 2 direkt auf dem Wickelkern 4 aufliegt. Erst beim ersten innersten Übereinanderliegen des Magnetmaßstabbands 2 ist das Zwischenlagenband 3 vorgesehen, so dass ein unmittelbares Aufeinanderliegen des Magnetmaßstabbands 2 in der Aufbewahrungsspule 1 unterbunden ist.

Das Magnetmaßstabband 2 ist ohne eine Haftvermittlungsschicht auf das Zwischenlagenband 3 aufgelegt, wobei Adhäsionskräfte ein Aneinanderhaften des Magnetmaßstabbands 2 und des Zwischenlagenbands 3 bewirken. Alternativ ist das Magnetmaßstabband 2 auf das Zwischenlagenband 3 geklebt. Das Zwischenlagenband 3 ist aus einem Polyethylenschaum hergestellt, so dass das Zwischenlagenband 3 paramagnetisch ist.

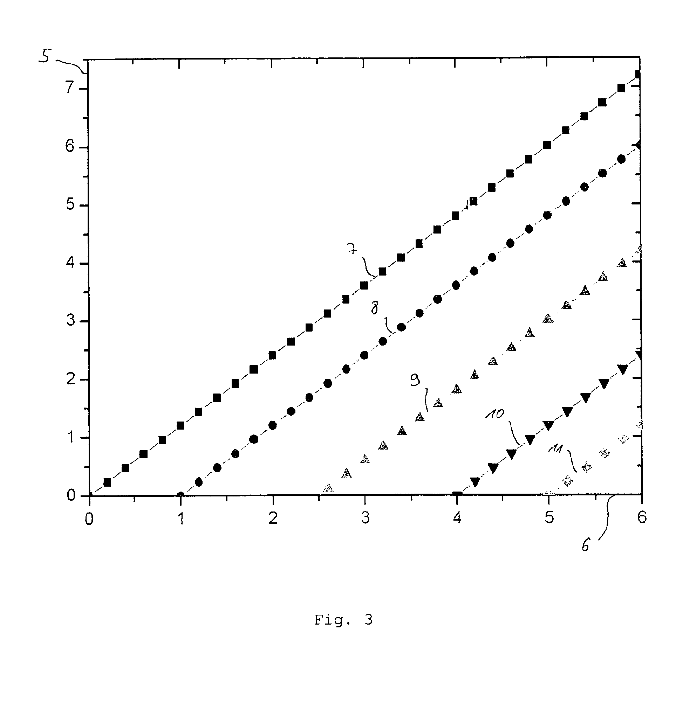

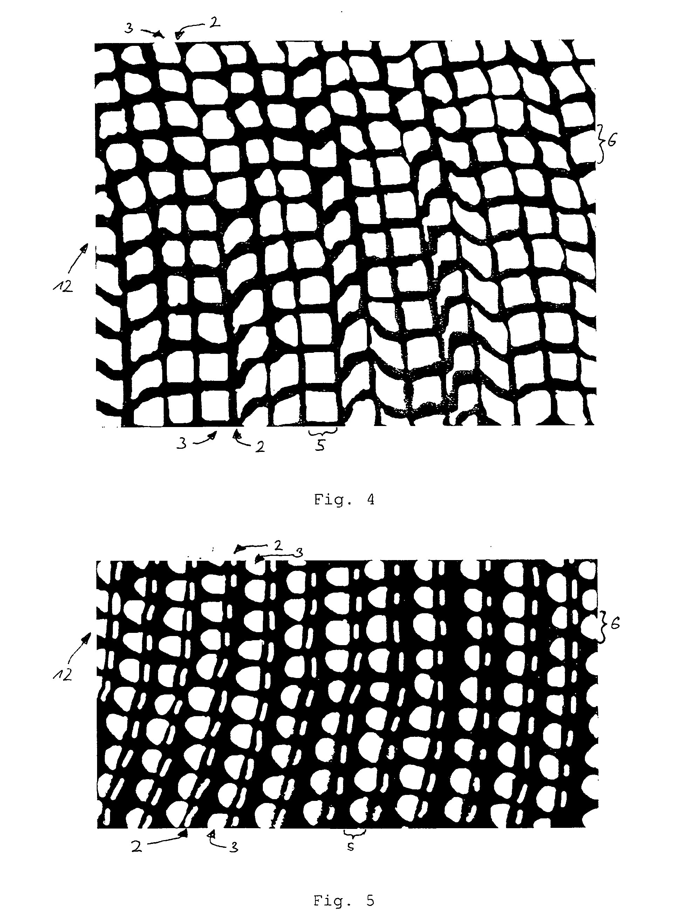

Gemäß den in Figuren 4 und 5 gezeigten Ausführungsformen weist das Magnetmaßstabband 2 die Polteilung 12 auf, deren Pollängen 6 jeweils 5 mm betragen, wobei die Polteilung 12 gleichförmig ist. An die Aufbewahrung des Magnetmaßstabbands 2 sind Genauigkeitsanforderungen hinsichtlich der Lagebeständigkeit der Polteilung 12 zu stellen. In Abhängigkeit von dieser Genauigkeitsanforderung und der Pollänge 6 ist die mindest erforderliche Dicke 5 des Zwischenlagenbands 3 zu ermitteln. Zur Ermittlung der Zwischenlagenbanddicke 5 ist das in Figur 3 gezeigte Diagramm heranzuziehen. In dem Diagramm ist über die Abszisse die Pollänge 6 in Millimeter und über die Ordinate die Zwischenlagenbanddicke 5 in Millimeter aufgetragen. In dem Diagramm ist eine Kurvenschar gezeigt, wobei für ausgewählte tolerierte Pollängenveränderungen der lineare Verlauf der Zwischenlagenbanddicke 5 gegenüber der Pollänge 6 gezeigt ist. Die mit dem Bezugszeichen 7 gekennzeichnete Kurve betrifft die tolerierte Pollängenveränderung von 0 µm/m, die mit dem Bezugszeichen 8 gekennzeichnete Linie betrifft die Pollängenveränderung von 10 µm/m, die mit dem Bezugszeichen 9 gekennzeichnete Linie betrifft die Pollängenveränderung von 25 µm/m, die mit dem Bezugszeichen 10 gekennzeichnete Linie betrifft die Pollängenveränderung von 40 µm/m und die mit dem Bezugszeichen 11 gekennzeichnete Linie betrifft die Pollängenveränderung von 50 µm/m.

Der im Diagramm gemäß Figur 3 gezeigte Kurvenschar 7 bis 11 liegt die Formel zugrunde: {Zwischenlagendicke 6 in [mm]} =1,2 * ({Pollänge 6 in [mm]} - {tolerierte Pollängenveränderung in [µm/m]}/10).

Zum Aufbewahren des Magnetmaßstabbands 2 mit der Aufbewahrungsspule 1 ist wie folgt vorzugehen: das Magnetmaßstabband 2 ist bereitzustellen, wobei das Magnetmaßstabband 2 mit der Polteilung 12 mit den vorherbestimmten Pollängen 6 magnetisiert ist. Zusätzlich ist der Wickelkern 4 bereitzustellen. Für das Magnetmaßstabband 2 ist die tolerierte Pollängenveränderung 7 bis 11 festzulegen. In Abhängigkeit der tolerierten Pollängenveränderung 7 bis 11 und der Pollänge 6 des Magnetmaßstabbands 2 ist gemäß dem Diagramm aus Figur 3 die mindest erforderliche Zwischenlagenbanddicke 5 zu bestimmen. Das Zwischenlagenband 3 ist mit ihrer Zwischenlagenbanddicke bereitzustellen, die auch größer als die gemäß dem Diagramm in Figur 3 ermittelten Dicke sein kann. So kann beispielsweise das Zwischenlagenband 3 aus mehreren Lagen gebildet sein, die beispielsweise in Normdicken bereitgestellt sind. Ist beispielsweise eine Zwischenlagenbanddicke 5 von 4 mm gefordert, so wären für das Zwischenlagenband 3 zwei Lagen mit je 3 mm denkbar, so dass sich das Zwischenlagenband 3 mit der Dicke von 6 mm ergibt.

Das Magnetmaßstabband 2 und das Zwischenlagenband 3 sind flächig aneinander zu legen, wobei durch Adhäsionskräfte das Magnetmaßstabband 2 und das Zwischenlagenband 3 aneinander haften. Das dadurch gebildete Wickelband ist spiralartig auf den Wickelkern 4 aufzuwickeln, wobei pro Wicklung das Zwischenlagenband 3 innenseitig und das Magnetmaßstabband 2 außenseitig angeordnet ist. Das Zwischenlagenband 3 ist aus Kunststoff, insbesondere einem Polyethylenschaum, hergestellt.

In Figuren 4 und 5 ist jeweils ein Ausschnitt einer Seitenansicht der Aufbewahrungsspule 1 mit magnetischem Kontrast gezeigt, wobei die hellen Bereiche Felder mit identischer magnetischer Polarität anzeigen. In beiden Ausführungsformen beträgt die Pollänge 6 5 mm. Gemäß der in Figur 4 gezeigten Ausführungsform ist das Zwischenlagenband 3 mit einer Dicke 5 von 3 mm gezeigt, wobei die einzelnen Wicklungen magnetisch miteinander gekoppelt sind und dadurch gemeinsame magnetische Domänen bilden. Daraus ergibt sich die tolerierte Pollängenveränderung 9 von 25 µm/m. Bei der in Figur 5 gezeigten Ausführungsform beträgt die Zwischenlagenbanddicke 5 6 mm, so dass sich daraus eine tolerierte Pollängenveränderung von 0 µm/m. Bei dieser Ausführungsform sind die einzelnen Wicklungen magnetisch voneinander entkoppelt und können keine gemeinsamen magnetischen Domänen bilden.

### Bezugszeichenliste

- 1: Aufbewahrungsspule
- 2: Magnetmaßstabband
- 3: Zwischenlagenband
- 4: Wickelkern
- 5: Zwischenlagenbanddicke
- 6: Pollänge
- 7: tolerierte Pollängenveränderung: 0 µm/m
- 8: tolerierte Pollängenveränderung: 10 µm/m
- 9: tolerierte Pollängenveränderung: 25 µm/m
- 10: tolerierte Pollängenveränderung: 40 µm/m
- 11: tolerierte Pollängenveränderung: 50 µm/m
- 12: Polteilung

## Patentansprüche

1. Aufbewahrungsspule mit einem Wickelkern (4) und einem ein ferromagnetisches Material aufweisenden Magnetmaßstabband (2), das mit einer Polteilung (12) mit vorherbestimmten Pollängen (6) magnetisiert ist, sowie einem Zwischenlagenband (3), das mindestens die Breite und die Länge des Magnetmaßstabbands (2) hat und an das das Magnetmaßstabband (2) flächig angelegt ist, wobei das Magnetmaßstabband (2) zusammen mit dem Zwischenlagenband (3) auf den Wickelkern (4) in mehreren Windungen spiralartig aufgewickelt ist, so dass in Radialrichtung des Wickelkerns (4) Windung für Windung das Magnetmaßstabband (2) und das Zwischenlagenband (3) sich abwechseln, wobei das Zwischenlagenband (3) aus einem paramagnetischen Material ist und eine Dicke (5) hat, die gleich oder größer einer Minimaldicke ist, die derart bestimmt ist, dass die einzelnen Windungen des Magnetmaßstabbands (2) von dem Zwischenlagenband (3) derart voneinander magnetisch entkoppelt sind, dass im Abwickelzustand die Pollängen (12) des Magnetmaßstabbands (2) trotz der magnetischen Wechselwirkung der einzelnen Windungen lediglich einer Pollängenveränderung unterliegen, die unterhalb einer vorgegebenen tolerierten Pollängenveränderung (7 bis 11) liegt.

2. Aufbewahrungsspule gemäß Anspruch 1, wobei die Minimaldicke direkt proportional zur minimalen vorherbestimmten Pollänge (6) ist.

3. Aufbewahrungsspule gemäß Anspruch 1 oder 2, wobei die Minimaldicke direkt proportional zur um die vorgegebene tolerierte Pollängenveränderung (7 bis 11) reduzierten minimalen vorherbestimmten Pollänge (6) ist, wobei die Minimaldicke und die minimale vorherbestimmte Pollänge (6) in mm und die vorgegebene tolerierte Pollängenveränderung (7 bis 11) in µm/m angegeben sind.

4. Aufbewahrungsspule gemäß Anspruch 3, wobei die Minimaldicke gleich dem eins bis zweifachen, insbesondere 1,2-fachen, der Differenz aus der minimalen vorherbestimmten Pollänge (6) und einem Zehntel der vorgegebenen tolerierten Pollängenveränderung (7 bis 11) ist.

5. Aufbewahrungsspule gemäß einem der Ansprüche 1 bis 4, wobei das paramagnetische Material ein Kunststoff, insbesondere ein Polyethylenschaum, ist.

6. Aufbewahrungsspule gemäß einem der Ansprüche 1 bis 5, wobei das Zwischenlagenband (3) von mehreren Lagen gebildet ist, deren Gesamtdicke gleich oder größer der Minimaldicke ist.

7. Verfahren zum Aufbewahren eines ein ferromagnetisches Material aufweisenden Magnetmaßstabbands (2) mit einer Aufbewahrungsspule (1) gemäß einem der Ansprüche 1 bis 6, mit den Schritten:
- Bereitstellen des Wickelkerns (4) und des Magnetmaßstabbands (2), das mit der Polteilung (12) mit den vorherbestimmten Pollängen (6) magnetisiert ist;
- Bestimmen der Minimaldicke des Zwischenlagenbands (3) derart, dass im Aufwickelzustand des Magnetmaßstabbands (2) die einzelnen Windungen des Magnetmaßstabbands (2) von dem Zwischenlagenband (3) derart voneinander magnetisch entkoppelt sind, dass im Abwickelzustand die Pollängen (12) des Magnetmaßstabbands (2) trotz der magnetischen Wechselwirkung der einzelnen Windungen lediglich einer Pollängenveränderung unterliegen, die unterhalb einer vorgegebenen tolerierten Pollängenveränderung (7 bis 11) liegt;
- Bereitstellen des Zwischenlagenbands (3) mit einer Breite, die mindestens der Breite des Magnetmaßstabbands (2) entspricht, einer Länge, die mindestens der Länge des Magnetmaßstabbands (2) entspricht, und einer Dicke (5), die gleich oder größer der Minimaldicke ist;
- Zusammenbringen des Magnetmaßstabbands (2) und des Zwischenlagenbands (3), so dass das Magnetmaßstabband (2) und das Zwischenlagenband (3) flächig aneinanderliegen;
- spiralartiges Aufwickeln des Magnetmaßstabbands (2) zusammen mit dem Zwischenlagenband (3) auf den Wickelkern (4), wobei das Magnetmaßstabband (2) zusammen mit dem Zwischenlagenband (3) auf den Wickelkern (4) in mehreren Windungen spiralartig aufgewickelt wird, so dass in Radialrichtung des Wickelkerns (4) Windung für Windung das Magnetmaßstabband (2) und das Zwischenlagerband (3) sich abwechseln.

8. Verfahren gemäß Anspruch 7, wobei die Minimaldicke als direkt proportional zur minimalen vorherbestimmten Pollänge (6) bestimmt wird.

9. Verfahren gemäß Anspruch 7 oder 8, wobei die Minimaldicke als direkt proportional zur um die vorgegebene tolerierte Pollängenveränderung (7 bis 11) reduzierte minimale vorherbestimmte Pollänge (6) bestimmt wird, wobei die Minimaldicke und die minimale vorherbestimmte Pollänge (6) in mm und die vorgegebene tolerierte Pollängenveränderung (7 bis 11) in µm/m angegeben werden.

10. Verfahren gemäß Anspruch 9, wobei die Minimaldicke als gleich dem eins bis zweifachen, insbesondere 1,2-fachen, der Differenz aus der minimalen vorherbestimmten Pollänge (6) und einem Zehntel der vorgegebenen tolerierten Pollängenveränderung (7 bis 11) bestimmt wird.

11. Verfahren gemäß einem der Ansprüche 7 bis 10, wobei das paramagnetische Material ein Kunststoff, insbesondere ein Polyethylenschaum, ist.

12. Verfahren gemäß einem der Ansprüche 7 bis 11, wobei das Zwischenlagenband (3) von mehreren Lagen gebildet wird, deren Gesamtdicke (5) gleich oder größer der Minimaldicke ist.

## Claims

1. Storage coil having a winding core (4) and a magnetic scale strip (2) which has a ferromagnetic material and which is magnetised with a pole pitch (12) having predetermined pole lengths (6), and having an intermediate layer strip (3) which has at least the width and the length of the magnetic scale strip (2) and on which the magnetic scale strip (2) is placed in a planar manner, the magnetic scale strip (2) being wound together with the intermediate layer strip (3) on the winding core (4) in a helical manner in a plurality of windings so that in a radial direction of the winding core (4) the magnetic scale strip (2) and the intermediate layer strip (3) are arranged as alternate windings, the intermediate layer strip (3) being of a paramagnetic material and having a thickness (5) which is greater than or equal to a minimum thickness which is determined in such a manner that the individual windings of the magnetic scale strip (2) and the intermediate layer strip (3) are magnetically decoupled from each other in such a manner that, in the unwound state, the pole lengths (12) of the magnetic scale strip (2), in spite of the magnetic interaction of the individual windings, are subjected to only one pole length change which is below a predetermined tolerated pole length change (7 to 11).

2. Storage coil according to claim 1, wherein the minimum thickness is directly proportional to the minimum predetermined pole length (6).

3. Storage coil according to claim 1 or claim 2, wherein the minimum thickness is directly proportional to the minimum predetermined pole length (6) which has been reduced by the predetermined tolerated pole length change (7 to 11), wherein the minimum thickness and the minimum predetermined pole length (6) are given in mm and the predetermined tolerated pole length change (7 to 11) is given in µm/m.

4. Storage coil according to claim 3, wherein the minimum thickness is equal to from one to two times, in particular 1.2 times, the difference from the minimum predetermined pole length (6) and a tenth of the predetermined tolerated pole length change (7 to 11).

5. Storage coil according to any one of claims 1 to 4, wherein the paramagnetic material is a plastics material, in particular a polyethylene foam.

6. Storage coil according to any one of claims 1 to 5, wherein the intermediate layer strip (3) is formed by a plurality of layers whose overall thickness is greater than or equal to the minimum thickness.

7. Method for storing a magnetic scale strip (2) which has a ferromagnetic material and which has a storage coil (1) according to any one of claims 1 to 6, having the steps of:
- providing the winding core (4) and the magnetic scale strip (2) which is magnetised with the pole pitch (12) having the predetermined pole lengths (6);
- determining the minimum thickness of the intermediate layer strip (3) in such a manner that, in the wound state of the magnetic scale strip (2), the individual windings of the magnetic scale strip (2) and the intermediate layer strip (3) are magnetically decoupled from each other in such a manner that, in the unwound state, the pole lengths (12) of the magnetic scale strip (2), in spite of the magnetic interaction of the individual windings, are subjected to only one pole length change which is below a predetermined tolerated pole length change (7 to 11);
- providing the intermediate layer strip (3) with a width which corresponds to at least the width of the magnetic scale strip (2), a length which corresponds to at least the length of the magnetic scale strip (2) and a thickness (5) which is greater than or equal to the minimum thickness;
- joining together the magnetic scale strip (2) and the intermediate layer strip (3) so that the magnetic scale strip (2) and the intermediate layer strip (3) are placed in a planar manner on each other;
- winding the magnetic scale strip (2) together with the intermediate layer strip (3) on the winding core (4) in a helical manner, the magnetic scale strip (2) being wound together with the intermediate layer strip (3) on the winding core (4) in a helical manner in a plurality of windings so that in a radial direction of the winding core (4) the magnetic scale strip (2) and the intermediate layer strip (3) are arranged as alternate windings.

8. Method according to claim 7, wherein the minimum thickness is determined to be directly proportional to the minimum predetermined pole length (6).

9. Method according to claim 7 or claim 8, wherein the minimum thickness is determined to be directly proportional to the minimum predetermined pole length (6) which has been reduced by the predetermined tolerated pole length change (7 to 11), wherein the minimum thickness and the minimum predetermined pole length (6) are given in mm and the predetermined tolerated pole length change (7 to 11) is given in µm/m.

10. Method according to claim 9, wherein the minimum thickness is determined to be equal to from one to two times, in particular 1.2 times, the difference from the minimum predetermined pole length (6) and a tenth of the predetermined tolerated pole length change (7 to 11).

11. Method according to any one of claims 7 to 10, wherein the paramagnetic material is a plastics material, in particular a polyethylene foam.

12. Method according to any one of claims 7 to 11, wherein the intermediate layer strip (3) is formed by a plurality of layers whose overall thickness (5) is greater than or equal to the minimum thickness.

## Revendications

1. Bobine d'entreposage présentant un moyeu d'enroulement (4), un feuillard magnétique gradué (2) qui présente un matériau ferromagnétique et magnétisé par une division polaire (12) dont les longueurs polaires (6) sont prédéterminées ainsi qu'un feuillard intercalaire (3) qui présente au moins la largeur et la longueur du feuillard magnétique gradué (2) et qui est posé à plat sur le feuillard magnétique gradué (2),
le feuillard magnétique gradué (2) étant enroulé en même temps que le feuillard intercalaire (3) en une spirale en plusieurs enroulements sur le moyeu d'enroulement (4), de telle sorte que le feuillard magnétique gradué (2) et le feuillard intercalaire (3) alternent d'un enroulement à l'autre dans la direction radiale du moyeu d'enroulement (4),
le feuillard intercalaire (3) étant réalisé en un matériau paramagnétique et présentant une épaisseur (5) égale ou supérieure à une épaisseur minimale définie de telle sorte que les différents enroulements du feuillard magnétique gradué (2) soient découplés magnétiquement du feuillard intercalaire (3) de telle sorte qu'à l'état déroulé, les longueurs polaires (12) du feuillard magnétique gradué (2) subissent malgré l'interaction magnétique entre les différents enroulements uniquement une modification de la longueur polaire qui est située en dessous d'une modification tolérée prédéterminée (7 à 11) de la longueur polaire.

2. Bobine d'entreposage selon la revendication 1, dans laquelle l'épaisseur minimale est directement proportionnelle à la longueur polaire minimale prédéterminée (6).

3. Bobine d'entreposage selon les revendications 1 ou 2, dans laquelle l'épaisseur minimale est directement proportionnelle à la longueur polaire minimale prédéterminée (6) diminuée de la modification tolérée prédéterminée (7 à 11) de la longueur polaire, l'épaisseur minimale et la longueur polaire minimale prédéterminée (6) étant données en mm et la modification tolérée prédéterminée (7 à 11) de la longueur polaire en µm/m.

4. Bobine d'entreposage selon la revendication 3, dans laquelle l'épaisseur minimale représente de une à deux fois et en particulier 1,2 fois la différence entre la longueur polaire minimale prédéterminée (6) et un dixième de la modification tolérée prédéterminée (7 à 11) de la longueur polaire.

5. Bobine d'entreposage selon l'une des revendications 1 à 4, dans laquelle le matériau paramagnétique est une matière synthétique et en particulier une mousse de polyéthylène.

6. Bobine d'entreposage selon l'une des revendications 1 à 5, dans laquelle le feuillard intercalaire (3) est formé de plusieurs couches dont l'épaisseur totale est égale ou supérieure à l'épaisseur minimale.

7. Procédé d'entreposage d'un feuillard magnétique gradué (2) qui présente un matériau ferromagnétique à l'aide d'une bobine d'entreposage (1) selon l'une des revendications 1 à 6, le procédé présentant les étapes suivantes :
préparer le moyeu d'enroulement (4) et le feuillard magnétique gradué (2) magnétisé par la division polaire (12) dont les longueurs polaires (6) sont prédéterminées,
déterminer l'épaisseur minimale du feuillard intercalaire (3) de telle sorte que lorsque le feuillard magnétique gradué (2) est enroulé, les différents enroulements du feuillard magnétique gradué (2) soient découplés magnétiquement du feuillard intercalaire (3) de telle sorte qu'à l'état déroulé, les longueurs polaires (12) du feuillard magnétique gradué (2) subissent malgré l'interaction magnétique entre les différents enroulements uniquement une modification de longueur polaire située en dessous d'une modification tolérée prédéterminée (7 à 11) de la longueur polaire,
préparer le feuillard intercalaire (3) à une largeur qui correspond au moins à la largeur du feuillard magnétique gradué (2), à une longueur qui correspond au moins à la longueur du feuillard magnétique gradué (2) et à une épaisseur (5) égale ou supérieure à l'épaisseur minimale,
rassembler le feuillard magnétique gradué (2) et le feuillard intercalaire (3) de telle sorte que le feuillard magnétique gradué (2) et le feuillard intercalaire (3) reposent à plat l'un contre l'autre,
enrouler en spirale le feuillard magnétique gradué (2) en même temps que le feuillard intercalaire (3) sur le moyeu d'enroulement (4), le feuillard magnétique gradué (2) étant enroulé en même temps que le feuillard intercalaire (3) en spirale en plusieurs enroulements sur le moyeu d'enroulement (4) de telle sorte que le feuillard magnétique gradué (2) et le feuillard intercalaire (3) alternent d'un enroulement à l'autre dans la direction radiale du moyen d'enroulement (4).

8. Procédé selon la revendication 7, dans lequel l'épaisseur minimale est déterminée comme directement proportionnelle à la longueur polaire minimale prédéterminée (6).

9. Procédé selon les revendications 7 ou 8, dans lequel l'épaisseur minimale est déterminée comme directement proportionnelle à la longueur polaire minimale prédéterminée (6) diminuée de la modification tolérée prédéterminée (7 à 11) de la longueur polaire, l'épaisseur minimale et la longueur polaire minimale prédéterminée (6) étant données en mm et la modification tolérée prédéterminée (7 à 11) de la longueur polaire en µm/m.

10. Procédé selon la revendication 9, dans lequel l'épaisseur minimale est déterminée comme représentant de une à deux fois et en particulier 1,2 fois la différence entre la longueur polaire minimale prédéterminée (6) et un dixième de la modification tolérée prédéterminée (7 à 11) de la longueur polaire.

11. Procédé selon l'une des revendications 7 à 10, dans lequel le matériau paramagnétique est une matière synthétique et en particulier une mousse de polyéthylène.

12. Procédé selon l'une des revendications 7 à 11, dans lequel le feuillard intercalaire (3) est formé de plusieurs couches dont l'épaisseur totale (5) est égale ou supérieure à l'épaisseur minimale.
